# FASCICULE DE BREVET EUROPEEN

(11) **EP 4 041 598 B1**
(45) Date de publication et mention de la délivrance du brevet: **04.09.2024**
(21) Numéro de dépôt: 20775640.4
(22) Date de dépôt: 24.09.2020
(51) Int. Cl.: B60Q 1/14, B60Q 11/00, H04W 12/069, H05B 47/125, H05B 45/44, H05B 47/18

(54) **PROCEDE D'AUTHENTIFICATION ENTRE UN MODULE DE COMMANDE ET UN MODULE D'ECLAIRAGE POUR UN VEHICULE AUTOMOBILE**
VERFAHREN ZUR AUTHENTIFIZIERUNG ZWISCHEN EINEM STEUERMODUL UND EINEM BELEUCHTUNGSMODUL FÜR EIN KRAFTFAHRZEUG
METHOD FOR AUTHENTICATION BETWEEN A CONTROL MODULE AND A LIGHTING MODULE FOR A MOTOR VEHICLE

(30) Priorité: 27.09.2019 FR 1910735
(43) Date de publication de la demande: 17.08.2022
(73) Titulaire: Valeo Vision, 93012 Bobigny Cedex (FR)
(72) Inventeur: VOIRIN, Patrice, 93012 BOBIGNY Cedex (FR); KOUKI, Houssem, 93012 BOBIGNY Cedex (FR); YANG, Feng, 93012 BOBIGNY Cedex (FR); DONNAT, Eric, 93012 BOBIGNY Cedex (FR); CARBONELL, Rodrigo, 93012 BOBIGNY Cedex (FR)
(74) Mandataire: Valeo Visibility
(86) Numéro de dépôt international: PCT/EP2020/076638
(87) Numéro de publication internationale: WO 2021/058610

(56) Documents cités:
- WO-A1-2017/055415
- WO-A1-2018/030895
- DE-A1- 102015 120 204
- DE-U1- 202019 100 543
- US-A1- 2006 193 133
- US-A1- 2009 058 321

## Description

L'invention se rapporte aux modules d'éclairage pour véhicules automobiles. En particulier, l'invention se rapporte à de tels modules impliquant des sources lumineuses matricielles.

Le document DE 20 2019 100543 U1 décrit des modules d'éclairage pour véhicule reliés par une liaison multiplexée à un module de commande.

Une diode électroluminescente, LED, est un composant électronique semi-conducteur capable d'émettre de la lumière lorsqu'il est parcouru par un courant électrique ayant au moins une intensité seuil. Dans le domaine automobile, on a de plus en plus recours à la technologie LED pour diverses solutions de signalisation lumineuse. Des matrices de LED sont particulièrement intéressantes dans le domaine de l'éclairage automobile. Des sources lumineuses matricielles peuvent être utilisées pour des fonctions de type « levelling », i.e., ajustement de la hauteur du faisceau lumineux émis, en fonction de l'assiette du véhicule et du profil de la route. D'autres applications comprennent le DBL (« Digital Bending Light ») ce qui correspond à l'ajustement de la direction du faisceau lumineux émis, pour suivre la route dans le plan horizontal, l'ADB (« Adaptive Driving Beam ») qui correspond à une fonction anti-éblouissement qui génère des zones d'ombre dans le faisceau lumineux émis par un feu de route pour ne pas gêner d'autres usagers de la route, mais aussi des fonctions de projection de motifs au sol utilisant le faisceau lumineux pixelisé.

Il est connu d'utiliser des sources lumineuses de différents types de technologies pour les applications d'éclairage citées. Il s'agit par exemple de la technologie monolithique, suivant laquelle une pluralité importante de sources élémentaires de type LED, équivalentes à des pixels, sont gravées dans un substrat semi-conducteur commun. Des connexions électriques intégrées permettent d'activer les pixels indépendamment les uns des autres. Une autre technologie connue est celle des microLED, qui engendre une matrice de LEDs de faibles dimensions, typiquement inférieures à 150µm. Il existe aussi des modules de type à micro-miroirs, DMD (« Digital Micro-Mirror Device »), qui impliquent une technologie de projection utilisant un modulateur d'intensité sur un faisceau uniforme. Des micro-miroirs, dont la position est commandée moyennant des éléments piézo-électriques, sont orientés de manière à réfléchir sélectivement un faisceau lumineux incident, de manière à ce que chaque micro-miroir corresponde à une source élémentaire de la matrice de pixels ainsi générée. La lumière issue d'une source est dirigée sur la matrice de micro-miroirs par une optique. Cette lumière a donc une distribution variable d'un module à l'autre, à cause du positionnement et des tolérances de fabrication de l'optique et de la source de lumière. Ceci engendre une intensité maximale variable d'un module à l'autre, pour un pixel donné. Dans ce cas chaque pixel aura une intensité maximale différente en fonction de la commande qui lui est transmise. De tels dispositifs d'éclairage sont conçus par des méthodes de production de masse. Il existe obligatoirement un jeu entre les éléments constitutifs du dispositif d'éclairage et/ou de signalisation d'une part pour permettre un assemblage aisé, et d'autre part parce que les pièces ne sont généralement pas usinées mais plutôt moulées en plastique, ce qui permet de réduire les coûts de production.

Il faut souligner, en particulier, la difficulté à aligner parfaitement une matrice à micro-miroirs avec la partie optique de projection, qui comprend généralement au moins une lentille. Du fait de la grande ouverture numérique de l'objectif utilisé pour la fonction de projection, la qualité de projection de l'image se dégrade significativement dès que le décalage latéral de l'axe optique atteint quelques micromètres. En pratique des déformations de l'image projetées sont donc inévitables en utilisant des solutions connues dans l'art. Chaque module de projection de ce type a un jeu de caractéristiques optiques qui lui est propre, notamment des caractéristiques d'aberrations géométriques, dont des propriétés de distorsion optique et d'aberration sphérique. Lors de la production de micro-miroirs, des aberrations géométriques peuvent être introduites. Tous ces éléments résultent dans un comportement non-homogène de la source lumineuse matricielle.

Tous ces modules précités ont des caractéristiques propres liées à la combinaison des tolérances de fabrication des composants. Lors de la production de composants semi-conducteurs tels que des LEDs ou des matrices de LEDs, des variations de de courant direct sont à ce jour inévitables. Il s'ensuit que dans une matrice de LEDs donnée, à courant de charge égale, les LEDs émettent des faisceaux lumineux d'intensités variables, non-homogènes. Alors qu'il est possible de corriger des consignes de projection afin de tenir compte des spécificités électroniques et/ou optiques d'un module d'éclairage, lorsqu'un défaut intervient au niveau du module lumineux, il est important de pouvoir néanmoins projeter une image par défaut qui manque d'éblouir les autres usagers de la route.

Lors de l'appairage entre un module de commande d'un véhicule automobile et d'un module d'éclairage, des données décrivant des caractéristiques de l'un ou l'autre des modules peuvent être échangées entre les modules afin de pouvoir en tenir compte lors du fonctionnement du véhicule automobile. Ces paramètres sont spécifiques à l'instance du module d'éclairage et peuvent être différents entre deux modules d'éclairage issus d'un même procédé de fabrication. Il est donc important de pouvoir s'assurer de la concordance entre les paramètres échangés lors de l'appairage et les paramètres utilisés lors du fonctionnement du module d'éclairage - d'autant plus dans le cas d'un éventuel échange de module d'éclairage.

L'invention a pour objectif de pallier à au moins un des problèmes posés par l'art antérieur. Plus précisément, l'invention a pour objectif de proposer un procédé d'authentification entre un module de commande d'un véhicule automobile et un module d'éclairage commandé par celui-ci.

Selon un premier aspect selon l'invention, défini par la revendication 1, un procédé d'authentification entre un module de commande et un module d'éclairage pour un véhicule automobile est proposé, dans lequel au moins un des deux modules est un module transmetteur, l'autre étant un module récepteur, les deux modules comprenant une unité de transmission/réception de données et étant reliés par un canal de communication de données qui leur permet d'échanger des données. Le procédé est remarquable en ce qu'il comprend les étapes de
a) transmission de données décrivant au moins un facteur d'authentification du module transmetteur vers le module récepteur ;
b) suite à la réception desdites données au niveau du module récepteur, vérification du facteur d'authentification moyennant une unité de calcul;
c) au niveau du module récepteur, abandon de la communication avec le module transmetteur si ladite vérification échoue, sinon poursuite de la communication.

De préférence, le facteur d'authentification peut comprendre une indication d'une date, ou d'un compteur d'échanges de données entre les deux modules.

De préférence, chacun des deux modules comprend une horloge, les horloges des deux modules étant synchronisées. De préférence, un compteur peut être initialisé à une valeur commune lors de l'appairage du module d'éclairage et du module de commande. De préférence, le compteur peut être incrémenté à la transmission et/ou réception d'un message au niveau de chacun des deux modules.

Le facteur d'authentification comprend selon l'invention des données cryptographiquement chiffrées, le module récepteur comprenant un élément de mémoire dans lequel sont stockées des données de vérification permettant de vérifier lesdites données chiffrées.

De préférence, les données cryptographiquement chiffrées peuvent comprendre une valeur hachée d'une indication de date, ou d'un compteur d'échanges de données entre les deux modules.

Le procédé peut de préférence comprendre une étape préliminaire d'échange de clés de chiffrage publiques entre les deux modules, lesdites clés de chiffrage faisant partie de paires de chiffrages publiques/privées associées aux deux modules respectivement.

De préférence, le facteur d'authentification peut comprendre des données signées ou chiffrées à l'aide de la clé privée du module transmetteur.

Le module transmetteur peut préférentiellement être le module de commande et lesdites données décrivant l'au moins un facteur d'authentification peuvent être comprises dans un entête d'un paquet de données, les données du paquet décrivant au moins une partie d'une consigne d'éclairage, une consigne par défaut, ou des données relatives au véhicule automobile.

De préférence, le module transmetteur peut être le module d'éclairage et lesdites données décrivant l'au moins un facteur d'authentification peuvent être comprises dans un entête d'un paquet de données, les données du paquet décrivant au moins une partie de données de calibration relatives à une source lumineuse du module d'éclairage.

La communication entre les deux modules peut de préférence être abandonnée suite à un nombre prédéterminé d'échecs de vérification des données décrivant un facteur d'authentification du module transmetteur.

Selon un deuxième aspect de l'invention, un système d'éclairage pour un véhicule automobile tel que défini par la revendication 10 est proposé. Le système est remarquable en ce qu'il comprend un module de commande ainsi qu'un module d'éclairage, les deux modules comprenant chacun une unité de transmission/réception et étant reliés par un canal de communication de données qui leur permet d'échanger des données. Le système est en outre remarquable en ce que le module de commande et le module d'éclairage sont configurés pour mettre en oeuvre les étapes du procédé selon un aspect de l'invention.

De préférence, le module d'éclairage peut comprendre une source lumineuse matricielle.

La source lumineuse matricielle peut de préférence comprendre une source monolithique, comprenant des sources lumineuses élémentaires électroluminescentes à éléments semi-conducteurs gravées dans un substrat commun et activables indépendamment les unes des autres.

La source lumineuse matricielle peut de préférence comprendre une matrice de type micro LED, comprenant une matrice de sources élémentaires réalisées par des diodes électroluminescentes, LED, de faibles dimensions, typiquement inférieures à 150 µm.

La source lumineuse matricielle peut de préférence comprendre un dispositif à micro-miroirs, DMD, (« Digital micromirror device »), dans lequel une source élémentaire comprend un micro-miroir d'une matrice, qui réfléchit de manière sélective en fonction de sa position un faisceau de lumière incident.

Le module d'éclairage peut de préférence comprendre une unité de commande. L'unité de commande peut de préférence être configurée pour commander ladite source lumineuse matricielle.

Le module d'éclairage peut de préférence comprendre un élément de mémoire dans lequel des données permettant d'authentifier le module sont enregistrées. De préférence, le module d'éclairage peut comprendre un processeur programmé pour chiffrer et/ou signer des données moyennant une clé cryptographique enregistrée dans ledit élément de mémoire.

De préférence, une défaillance au niveau du module d'éclairage et/ou du module de commande du véhicule automobile peut être détectée lorsque le déchiffrage des données n'aboutit pas ou lorsque ladite signature ne peut pas être validée.

Le module d'éclairage peut de préférence comprendre une unité de réception/d'envoi de données. L'unité de réception et d'envoi de données peut de préférence comprendre une interface réseau capable de recevoir/envoyer des données sur un bus de données interne au véhicule automobile. Par exemple, le bus peut être un bus Ethernet, un bus de type Gigabit Multimedia Serial Link, GMSL, ou un bus de technologie Low Voltage Differential Signaling, LVDS, comme un bus FPD-Link III.

L'unité de calcul peut de préférence comprendre un élément microcontrôleur. L'unité de commande peut préférentiellement comprendre une puce de type « Field Programmable Gate Array », FPGA, « Application Specific Integrated Circuit », ASIC, ou « Complex Programmable Logic Device », CPLD. Ces éléments sont configurés moyennant un programme informatique approprié pour mettre en oeuvre les fonctionnalités décrites.

Un troisième aspect de l'invention est défini par la revendication 11.

Un support de stockage non transitoire lisible par ordinateur est proposé, ledit support stockant un programme d'ordinateur selon l'aspect précédent de l'invention.

En utilisant les mesures proposées par la présente invention, il devient possible de proposer un procédé d'authentification entre un module de commande d'un véhicule automobile et un module d'éclairage commandé par celui-ci. Ceci permet aux deux modules de s'assurer automatiquement que le module qui lui transmet des données (par exemple des consignes lumineuses à réaliser) est bien le module avec lequel un procédé d'appairage a préalablement eu lieu lors de l'assemblage du véhicule automobile. Lorsque lors de l'appairage des paramètres décrivant par exemple l'assiette du véhicule, la position du module d'éclairage au sein du véhicule automobile, ou encore des données de calibration d'une source lumineuse du module d'éclairage sont échangés, il est important que les modules puissent s'assurer que les paramètres initialement échangés restent valables. Ceci est possible en utilisant le procédé d'authentification selon des aspect de l'invention. Une authentification réussie peut par exemple signifier que les modules ont été appariés correctement au préalable, alors qu'une authentification non réussie signifie que l'un ou l'autre des modules a été échangé entretemps, qu'un nouvel appairage est nécessaire, ou que l'un ou l'autre des modules est en mode de défaillance.

D'autres caractéristiques et avantages de la présente invention seront mieux compris à l'aide de la description des exemples et des dessins parmi lesquels :
- la Fig. 1 montre la séquence des étapes principales d'un procédé en accord avec un mode de réalisation préférentiel de l'invention ;
- la Fig. 2 est une illustration d'un système d'éclairage en accord avec un mode de réalisation préférentiel de l'invention.

La description se concentre sur les éléments d'un module d'éclairage pour un véhicule automobile qui sont nécessaires à la compréhension de l'invention. D'autres éléments, qui font de manière connue partie de tels modules, ne seront pas mentionnées ni décrits en détails. Par exemple, la présence et le fonctionnement d'un circuit convertisseur impliqué l'alimentation électrique d'une source lumineuse matricielle, en soi connu, ne sera pas décrit en détails. Il en va de même pour des éléments optiques tels que des lentilles par exemple.

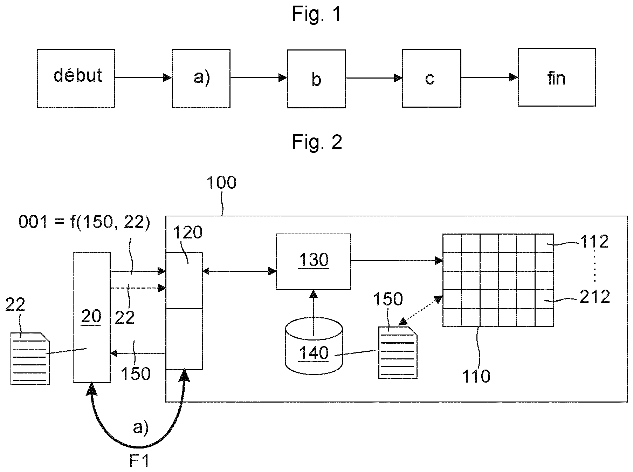

La figure 1 illustre les étapes principales d'un procédé d'authentification selon un mode de réalisation préférentiel de l'invention. Le procédé implique un module de commande 20 tel qu'il est illustré par la figure 2, ainsi qu'un module d'éclairage 100 pour un véhicule automobile. Selon la transmission de données du module de commande 20 au module d'éclairage ou vice-versa, à chaque transmission au moins un des deux modules est un module transmetteur, l'autre étant un module récepteur. Les deux modules 20, 100 comprennent chacun une unité de transmission/réception de données et ils sont reliés par un canal de communication de données qui leur permet d'échanger des données. Lors d'une première étape a), des données qui décrivent au moins un facteur d'authentification F1 du module transmetteur sont transmises vers le module récepteur. A l'étape b), ces données sont reçues au niveau du module récepteur et vérifiées moyennant une unité de calcul, telle qu'un processeur de données programmé à cet effet par un programme informatique approprié. Si la vérification échoue, la communication entre les modules est abandonnée à l'étape c). De préférence, le module en question est mis en défaillance et un message correspondant est émis à destination d'une unité centrale du véhicule automobile. En cas succès de vérification, la communication continue. Tandis que la procédure d'authentification peut être réalisée sur chaque paquet de données, elle peut alternativement être réalisé périodiquement.

La fonction d'authentification peut par exemple comprendre l'échange de clés cryptographiques publiques entre les deux modules en question, permettant ainsi la vérification par l'un et l'autre de l'authenticité de données signées moyennant les clés cryptographique privées correspondantes. Alternativement ou cumulativement, l'unité de commande/de calcul 130 du module d'éclairage 100 envoie un accusé de réception vers le module de commande 20 pour un paquet de données reçu, l'accusé de réception comportant au moins un facteur d'authentification F1 permettant d'authentifier le microcontrôleur qui réalise l'unité de calcul 130. Le paquet de données peut par exemple contenir des données de calibration, et/ou des données d'images par défaut et/ou des données pour générer une image par défaut et/ou tout ou partie d'une image et/ou d'un groupe d'images, et/ou un paquet d'un flux vidéo compressé. Dans un mode de réalisation préférentiel, cette authentification n'est pas réalisée sur tous les paquets. De la sorte, la charge de calcul correspondante est allégée et lissée dans le temps. Encore alternativement, la fonction d'authentification peut comprendre l'envoi, du module de commande 20 du véhicule automobile vers l'unité de commande 130 du module d'éclairage, d'un entête pour un paquet de données envoyé, l'entête comportant une partie permettant d'authentifier le module de commande 20, le paquet de données étant du même type que précédemment défini. Avantageusement cette authentification n'est pas réalisée sur tous les paquets. De la sorte, la charge de calcul correspondante est allégée et lissée dans le temps.

Afin de réaliser la fonction d'authentification, le module d'éclairage 100 ainsi que le module de commande 20 du véhicule automobile comprennent des moyens de calcul pour générer l'entête respectivement l'accusé de réception servant à l'authentification. De préférence, la génération du facteur d'authentification est faite en fonction
d'un temps ou d'une date, pouvant être exprimé en une unité de temps quelconque, par exemple en millisecondes, ou
d'un compteur comptant des échanges ou des cycles de calcul, ou
d'un autre élément qui évolue avec le nombre d'échanges, pouvant être réinitialisé lorsque qu'il dépasse une taille prédéfinie.

Si les deux modules comprennent des horloges et/ou des compteurs synchronisés, l'un et l'autre peuvent vérifier les données de l'entête en les comparants à la valeur de sa propre horloge, ou de son propre compteur correspondant. Les données de l'entête peuvent également être hachés en utilisant une fonction de hachage cryptographique. Le module récepteur peut générer une valeur hachée de son compteur correspondant. Uniquement si les deux compteurs des modules communicants sont strictement identiques, la valeur hachée ainsi obtenue sera identique à celle de l'entête.

Dans le cas où l'authentification entre le contrôleur et le microcontrôleur échoue, la fonction d'éclairage peut être mise dans un mode de défaillance de la communication. Avantageusement, le mode de défaillance n'est activé que lorsque des échecs de l'authentification sont répétés, ce qui permet d'éviter d'activer le mode de défaillance si la liaison a été perturbée, par exemple par des perturbations électromagnétiques passagères, ce qui est en particulier avantageux dans le cas d'une fonction d'authentification utilisant des entêtes ou des accusés de réception.

Dans le cas où l'unité de commande 130 comprend un calculateur, il peut implémenter une fonction de chiffrage des échanges de données, dans laquelle des données chiffrées par le module de commande 20 du véhicule automobile sont déchiffrées par le calculateur. Avantageusement, le calculateur dispose d'une méthode pour déterminer si le flux n'est pas décodé correctement. Si le flux n'est pas décodé correctement, le calculateur peut passer dans un mode de défaillance de la communication. Le mode de défaillance de la communication peut impliquer les procédures suivantes, prises seules ou en combinaison :
- l'arrêt de la fonction d'éclairage ou la projection par le module d'éclairage d'une image par défaut,
- la génération par le module de commande 20 d'un signal de défaillance émis vers un système central de gestion de l'automobile,
- le passage du calculateur dans un mode d'authentification où le calculateur continue à lancer une procédure d'authentification auprès du calculateur du module de commande 20 (ou vice-versa). Dans le mode d'authentification, l'envoi des paquets de données peut être interrompu.

Lorsque l'authentification initiale se termine avec succès la suite de la communication entre les modules 20, 100 peut, selon un mode de réalisation préférentiel qui sera décrit de manière non-limitative dans la suite avec référence à l'illustration de la figure 2, concerner un procédé de génération d'une image par défaut. Il est à noter que le procédé d'authentification peut être réalisé à chaque transmission d'un paquet de données, ou bien de manière périodique.

Le module d'éclairage 100 comprend de préférence une source lumineuse matricielle 110 regroupant une pluralité de sources lumineuses élémentaires 112. Dans l'exemple illustré, il s'agit d'une matrice de LEDs sans pour autant que l'invention ne soit limitée à cet exemple. La source lumineuse matricielle peut également être réalisée par un dispositif à micro-miroirs, pour lequel chaque miroir est adapté à générer un faisceau lumineux élémentaire d'une matrice. Le module comprend une unité de réception et d'envoi de données 120, il s'agit par exemple d'une interface capable de recevoir et décoder des messages sur un bus de données interne au véhicule automobile, tel qu'un bus de type CAN (« Controller Area Network »).

L'unité de réception données 120 est apte à recevoir/envoyer des données de/à au moins un module de commande du véhicule automobile - notamment elle peut réaliser les échanges des étapes a) ou b) du procédé d'authentification décrits préalablement. Le module de commande 20 comprend des données 22 relatives au véhicule automobile, tels que son assiette, la position du module d'éclairage dans le véhicule automobile, ou autres. Le module 100 comprend en outre un élément de mémoire 140, tel qu'une mémoire de type flash, auquel l'unité de commande 130 est fonctionnellement reliée et possède un accès en lecture, et dans lequel des données de calibration 150 propres à la source matricielle 112 sont enregistrées. A titre d'exemple les données peuvent comprendre pour chaque source lumineuse élémentaire 112 une valeur indiquant la différence de luminosité par rapport à la luminosité moyenne de la source matricielle 110, possiblement sur une gamme d'intensités de courant de charge. Les données 150 peuvent néanmoins comprendre des paramètres optiques ou géométriques de calibration plus complexes, sans pour autant sortir du cadre de la présente invention

L'échange des données entre le module lumineux 100 et le module de commande 20 du véhicule automobile à l'appairage des deux modules permet des applications intéressantes. Notamment, il est proposé de combiner des données relatives au véhicule 22, comme par exemple des paramètres d'orientation, de position, ou d'assiette du véhicule, ou encore des informations par rapport à des flux lumineux émis par d'autres projecteurs du véhicule, qui ne sont a priori disponibles uniquement au niveau du module de commande 20, avec les données de calibration 150, disponibles au niveau du module d'éclairage 100 et spécifiques à la source matricielle 110 embarquée dans celui-ci. Ces informations sont utilisées, selon un mode de réalisation préférentiel mais de manière non-limitative par le module de commande 20 du véhicule automobile pour générer une consigne ou image par défaut 001. Pour ce faire, la partie pertinente des données de calibration 150 est d'abord transmise du module d'éclairage 100 en direction du module de commande 20, comme indiqué par la flèche en trait continu de la Figure 2. En effet, le module de commande du véhicule automobile présente en général une capacité de calcul accrue par rapport à l'unité de commande 130 du module d'éclairage.

Alternativement, ce calcul peut être réalisé par l'unité de commande 130 du module d'éclairage après un échange correspondant des données 22 requises pour ce calcul entre l'unité de commande du véhicule automobile d'une part, et l'unité de commande du module d'éclairage d'autre part, représenté par la flèche en pointillées de la figure 2.

Une image par défaut est une image qui est projetée par le module lorsqu'un défaut ou une panne est détecté. Ainsi, le module peut de préférence comprendre un circuit électronique de détection d'erreur non-illustré, ou un microprocesseur programmé à cet effet par un programme informatique approprié. Le circuit de détection d'erreur est configuré pour détecter par exemple que les données reçues par le module de commande du véhicule automobile sont incohérentes, ou que la connexion entre le module de commande du véhicule automobile et le module d'éclairage 100 n'est plus fiable. Suite à cette détection d'erreur, l'image par défaut 001, est projetée à la place de l'image de consigne actuelle, dans le but d'éviter l'éblouissement potentiel d'autres usagers de la route. L'image par défaut est générée pour prendre en compte les spécificités de la source lumineuse matricielle 110 d'une part, et du véhicule qu'elle équipe de l'autre part. Ainsi l'image par défaut peut par exemple être générée de manière précise et automatique pour chaque véhicule automobile et chaque module d'éclairage qui l'équipe. De préférence, l'image par défaut résultante de ce procédé est transmise vers le module d'éclairage, qui la stocke de manière permanente dans un élément de mémoire dédié. En cas de défaillance de la communication entre le module de commande 20 du véhicule automobile et le module d'éclairage 100, la consigne par défaut sert alors de commande à la source lumineuse matricielle. L'image ou consigne par défaut peut par exemple correspondre à un éclairage de feu de croisement. En particulier, cette image peut correspondre à une coupure de feu de croisement. En effet la coupure doit être bien définie pour satisfaire la réglementation en vigueur. Le génération précise de la consigne par défaut, prenant en compte tous les paramètres décrits, permet notamment d'éviter que d'autres usagers de la route soient éblouis lorsque la consigne par défaut est projetée par le module d'éclairage.

Selon un mode de réalisation préférentiel, en absence de défaut et suite à l'appairage entre le véhicule automobile et le module d'éclairage, le module de commande 20 peut par exemple envoyer une consigne d'allumage au module d'éclairage 100, qui est chargée de commander la source lumineuse matricielle en fonction de la consigne reçue. Une telle consigne peut par exemple comprendre une valeur de luminosité, tel qu'un niveau de gris, encodée sur un nombre prédéterminé de bits et à réaliser par chacune des sources lumineuses élémentaires 112. La consigne d'allumage peut donc être une image digitale, et elle peut en particulier être une trame d'un flux de telles images, constituant un signal vidéo. L'unité de commande 130 est destinée à commander ladite source lumineuse matricielle en fonction de ladite consigne d'éclairage. L'unité de commande peut être reliée à, ou comprendre, un circuit de pilotage de l'alimentation électrique des sources lumineuses élémentaires 112, qui est commandé pour alimenter les sources lumineuses élémentaires de manière à réaliser la consigne d'éclairage.

Afin de garantir une intensité lumineuse homogène, l'unité de commande 130 ajuste les valeurs de consigne reçues par le module de commande 20 en y additionnant ou retranchant les différences respectives décrites dans les données de calibration 150, avant de commander les sources lumineuses élémentaires en accord avec le résultat. Les données 150 peuvent néanmoins comprendre des paramètres optiques ou géométriques de calibration plus complexes, sans pour autant sortir du cadre de la présente invention. Dans un tel cas, au lieu d'agir uniquement au niveau de chaque source lumineuse ou de chaque pixel de manière individuelle, la correction de la consigne d'origine peut avantageusement engendrer une correction au niveau de toute la consigne, i.e. de toute l'image à projeter, ou au niveau d'au moins une partie ou zone de cette image. Par exemple, l'image projetée sans la correction de consigne pourrait présenter une allure courbée concave due à l'optique de projection aux abords de la zone de projection. La réalisation de la consigne précorrigée, qui prend en compte les données de calibration y compris la déformation géométrique infligée par l'optique de projection, résulte dans une image projetée présentant une géométrie plus proche de la géométrie non-courbée désirée. Pour appliquer une correction des aberrations géométriques, il est utile d'appliquer une déformation à toute l'image de consigne d'origine. Comme celle-ci est discrétisée, cette déformation provoque une dégradation de l'information contenue dans l'image initiale. Il est donc avantageux que l'image de cosigne transmise depuis l'unité de commande du véhicule vers l'unité de commande soit d'une résolution supérieure à la résolution de projection du module lumineux.

L'unité de commande 130 comprend un élément microcontrôleur ayant une puissance de calcul suffisante pour corriger la consigne 10, ou bien un flux de consignes, en temps réel, en y appliquant les données de calibration 150.

Selon un mode de réalisation préférentiel, le module d'éclairage est agencé pour transmettre au moins une partie des données de calibration 150, et de préférence l'intégralité de ces données, vers le module de commande 20. Ceci est par exemple réalisé lors d'une phase d'initialisation du module d'éclairage. Afin de garantir une intensité lumineuse homogène, le module de commande 20 prend en compte les valeurs de calibration 150 ainsi reçues pour déterminer l'image de consigne. Par exemple, le module de commande 20 ajuste les valeurs de consigne en y additionnant ou retranchant les différences respectives, avant de transmettre le résultat au module d'éclairage 100. Les données 150 peuvent néanmoins comprendre des paramètres optiques ou géométriques de calibration plus complexes, sans pour autant sortir du cadre de la présente invention. Dans ce mode de réalisation l'unité de commande 130 est libérée de la tâche de correction de la consigne, et elle peut être réalisée par un élément microcontrôleur moins onéreux et présentant une moindre puissance de calcul.

Il va de soi que les modes de réalisation décrits ne limitent pas l'étendue de la protection de l'invention. En faisant recours à la description qui vient d'être donnée, d'autres modes de réalisation sont envisageables sans pour autant sortir du cadre de la présente invention.

L'étendue de la protection est déterminée par les revendications. 1

## Revendications

1. Procédé d'authentification entre un module de commande (20) et un module d'éclairage (100) pour un véhicule automobile, dans lequel au moins un des deux modules est un module transmetteur, l'autre étant un module récepteur, les deux modules (20, 100) comprenant une unité de transmission/réception de données et étant reliés par un canal de communication de données qui leur permet d'échanger des données, le procédé comprenant les étapes de
a) transmission de données décrivant au moins un facteur d'authentification (F1) du module transmetteur vers le module récepteur ;
b) suite à la réception desdites données au niveau du module récepteur, vérification du facteur d'authentification (F1) moyennant une unité de calcul;
c) au niveau du module récepteur, abandon de la communication avec le module transmetteur si ladite vérification échoue, sinon poursuite de la communication. **caractérisé en ce que** le facteur d'authentification (F1) comprend des données cryptographiquement chiffrées, le module récepteur comprenant un élément de mémoire dans lequel sont stockées des données de vérification permettant de vérifier lesdites données chiffrées.

2. Procédé selon la revendication précédente, **caractérisé en ce que** le facteur d'authentification (F1) comprend en outre une indication d'une date, ou d'un compteur d'échanges de données entre les deux modules (20, 100).

3. Procédé selon la revendication précédente, **caractérisé en ce que** les données cryptographiquement chiffrées comprennent une valeur hachée d'une indication de date, ou d'un compteur d'échanges de données entre les deux modules.

4. Procédé selon l'une des revendications précédentes, comprenant l'étape préliminaire d'échange de clés de chiffrage publiques entre les deux modules (20, 100), lesdites clés de chiffrage faisant partie de paires de chiffrages publiques/privées associées aux deux modules respectivement.

5. Procédé selon la revendication précédente, **caractérisé en ce que** le facteur d'authentification (F1) comprend des données signées ou chiffrées à l'aide de la clé privée du module transmetteur.

6. Procédé selon l'une des revendications précédentes, **caractérisé en ce que** le module transmetteur est le module de commande (20) et **en ce que** lesdites données décrivant l'au moins un facteur d'authentification (F1) sont comprises dans un entête d'un paquet de données, les données du paquet décrivant au moins une partie d'une consigne d'éclairage, une consigne par défaut, ou des données relatives au véhicule automobile (22).

7. Procédé selon une des revendications 1 à 5, **caractérisé en ce que** le module transmetteur est le module d'éclairage (100) et **en ce que** lesdites données décrivant l'au moins un facteur d'authentification (F1) sont comprises dans un entête d'un paquet de données, les données du paquet décrivant au moins une partie de données de calibration (150) relatives à une source lumineuse (110) du module d'éclairage.

8. Procédé selon la revendication précédente, **caractérisé en ce que** la source lumineuse (110) comprend une source lumineuse matricielle.

9. Procédé selon l'une des revendications précédentes, **caractérisé en ce que** la communication entre les deux modules (20, 100) est abandonnée suite à un nombre prédéterminé d'échecs de vérification des données décrivant un facteur d'authentification du module transmetteur.

10. Système d'éclairage pour un véhicule automobile, le système comprenant un module de commande (20) ainsi qu'un module d'éclairage (100), les deux modules comprenant chacun une unité de transmission/réception et étant reliés par un canal de communication de données qui leur permet d'échanger des données, **caractérisé en ce que** le module de commande et le module d'éclairage sont configurés pour mettre en oeuvre les étapes du procédé selon l'une des revendications précédentes.

11. Ensemble de deux programmes d'ordinateur comprenant chacun une suite d'instructions qui, lorsqu'elles sont exécutées respectivement par un processeur du module de commande (20) et par un processeur du module d'éclairage (100) d'un système d'éclairage selon la revendication 10, conduisent les processeurs à mettre en oeuvre un procédé selon une des revendications 1 à 9.

## Patentansprüche

1. Verfahren zur Authentifizierung zwischen einem Steuermodul (20) und einem Beleuchtungsmodul (100) für ein Kraftfahrzeug, wobei mindestens eines der beiden Module ein Sendermodul ist und das andere ein Empfängermodul, wobei die beiden Module (20, 100) eine Datensende-/-empfangseinheit umfassen und durch einen Datenkommunikationskanal verbunden sind, der es ihnen ermöglicht, Daten auszutauschen, **dadurch gekennzeichnet, dass** das Verfahren die folgenden Schritte umfasst: a) Senden von Daten, die mindestens einen Authentifizierungsfaktor (F1 ) beschreiben, vom Sendermodul zum Empfängermodul ; b) nach dem Empfang der Daten im Empfängermodul, Verifizierung des Authentifizierungsfaktors (F1 ) durch eine Recheneinheit; c) im Empfängermodul, Abbruch der Kommunikation mit dem Sendermodul, wenn die Verifizierung fehlschlägt, andernfalls Fortsetzung der Kommunikation.

2. Verfahren nach dem vorhergehenden Anspruch, **dadurch gekennzeichnet, dass** der Authentifizierungsfaktor (F1 ) eine Angabe eines Datums oder eines Zählers des Datenaustauschs zwischen den beiden Modulen (20, 100) umfasst.

3. Verfahren nach einem der vorhergehenden Ansprüche, **dadurch gekennzeichnet, dass** der Authentifizierungsfaktor (F1 ) kryptografisch verschlüsselte Daten umfasst, wobei das Empfängermodul ein Speicherelement umfasst, in dem Verifizierungsdaten gespeichert sind, die es ermöglichen, die verschlüsselten Daten zu verifizieren.

4. Verfahren nach dem vorhergehenden Anspruch, **dadurch gekennzeichnet, dass** die kryptografisch verschlüsselten Daten einen Hashwert einer Datumsangabe oder eines Zählers für den Datenaustausch zwischen den beiden Modulen umfassen. Verfahren nach einem der vorhergehenden Ansprüche, umfassend den einleitenden Schritt des Austauschs öffentlicher Verschlüsselungsschlüssel zwischen den beiden Modulen (20, 100), wobei die Verschlüsselungsschlüssel Teil von öffentlichen/privaten Verschlüsselungspaaren sind, die den beiden Modulen jeweils zugeordnet sind.

5. Verfahren nach dem vorhergehenden Anspruch, **dadurch gekennzeichnet, dass** der Authentifizierungsfaktor (F1 ) Daten umfasst, die mit Hilfe des privaten Schlüssels des übertragenden Moduls signiert oder verschlüsselt wurden.

6. Verfahren nach einem der vorhergehenden Ansprüche, **dadurch gekennzeichnet, dass** das Sendermodul das Steuermodul (20) ist und dass die Daten, die den mindestens einen Authentifizierungsfaktor (F1 ) beschreiben, in einem Header eines Datenpakets enthalten sind, wobei die Daten des Pakets mindestens einen Teil eines Beleuchtungssollwerts, eines Standard-Sollwerts oder Daten über das Kraftfahrzeug (22) beschreiben.

7. Verfahren nach einem der Ansprüche 1 bis 6, **dadurch gekennzeichnet, dass** das Sendermodul das Beleuchtungsmodul (100) ist und dass die Daten, die den mindestens einen Authentifizierungsfaktor (F1 ) beschreiben, in einem Header eines Datenpakets enthalten sind, wobei die Daten des Pakets mindestens einen Teil von Kalibrierungsdaten (150) beschreiben, die sich auf eine Lichtquelle (110) des Beleuchtungsmoduls beziehen.

8. Verfahren nach dem vorhergehenden Anspruch, **dadurch gekennzeichnet, dass** die Lichtquelle (110) eine Matrix-Lichtquelle umfasst.

9. Verfahren nach einem der vorhergehenden Ansprüche, **dadurch gekennzeichnet, dass** die Kommunikation zwischen den beiden Modulen (20, 100) nach einer vorbestimmten Anzahl von Fehlversuchen bei der Überprüfung von Daten, die einen Authentifizierungsfaktor des Sendermoduls beschreiben, abgebrochen wird.

10. Beleuchtungssystem für ein Kraftfahrzeug, wobei das System ein Steuermodul (20) sowie ein Beleuchtungsmodul (100) umfasst, wobei beide Module eine Sende-/Empfangseinheit umfassen und über einen Datenkommunikationskanal verbunden sind, der ihnen den Austausch von Daten ermöglicht, **dadurch gekennzeichnet, dass** das Steuermodul und das Beleuchtungsmodul so konfiguriert sind, dass sie die Schritte des Verfahrens nach einem der vorhergehenden Ansprüche ausführen.

11. Computerprogramm mit einer Folge von Anweisungen, die, wenn sie von einem Prozessor ausgeführt werden, den Prozessor dazu veranlassen, ein Verfahren nach einem der Ansprüche 1 bis 9 auszuführen.

## Claims

1. Authentication method between a control module (20) and a lighting module (100) for a motor vehicle, in which at least one of the two modules is a transmitter module, the other being a receiver module, the two modules (20, 100) comprising a data transmission/reception unit and being connected by a data communication channel which enables them to exchange data, **characterised in that** the method comprises the steps of a) transmitting data describing at least one authentication factor (F1 ) from the transmitter module to the receiver module ; b) following reception of said data at the receiving module, verification of the authentication factor (F1 ) by means of a calculation unit; c) at the receiving module, termination of the communication with the transmitting module if said verification fails, otherwise continuation of the communication.

2. Method according to the preceding claim, **characterised in that** the authentication factor (F1 ) comprises an indication of a date, or of a counter of data exchanges between the two modules (20, 100).

3. Method according to one of the preceding claims, **characterized in that** the authentication factor (F1 ) comprises cryptographically encrypted data, the receiver module comprising a memory element in which verification data is stored, making it possible to verify the said encrypted data.

4. Method according to the preceding claim, **characterized in that** the cryptographically encrypted data comprise a hashed value of a date indication, or of a counter of data exchanges between the two modules. Method according to one of the preceding claims, comprising the preliminary step of exchanging public encryption keys between the two modules (20, 100), said encryption keys forming part of public/private encryption pairs associated with the two modules respectively.

5. Method according to the preceding claim, **characterised in that** the authentication factor (F1 ) comprises data signed or encrypted using the private key of the transmitting module.

6. Method according to one of the preceding claims, **characterized in that** the transmitter module is the control module (20) and **in that** the said data describing the at least one authentication factor (F1 ) are included in a header of a data packet, the data in the packet describing at least part of a lighting setpoint, a default setpoint, or data relating to the motor vehicle (22).

7. Method according to one of claims 1 to 6, **characterized in that** the transmitter module is the lighting module (100) and **in that** the said data describing the at least one authentication factor (F1 ) are included in a header of a data packet, the data of the packet describing at least part of calibration data (150) relating to a light source (110) of the lighting module.

8. A method according to the preceding claim, **characterised in that** the light source (110) comprises a matrix light source.

9. A method according to one of the preceding claims, **characterised in that** communication between the two modules (20, 100) is abandoned following a predetermined number of failed verifications of data describing an authentication factor of the transmitter module.

10. Lighting system for a motor vehicle, the system comprising a control module (20) and a lighting module (100), the two modules comprising a transmission/reception unit and being connected by a data communication channel which enables them to exchange data, **characterized in that** the control module and the lighting module are configured to implement the steps of the method according to one of the preceding claims.

11. A computer program comprising a sequence of instructions which, when executed by a processor, cause the processor to implement a method according to one of claims 1 to 9.
